# DEMANDE DE BREVET EUROPEEN

(11) **EP 4 624 979 A1**
(43) Date de publication de la demande: **01.10.2025**
(21) Numéro de dépôt: 25164305.2
(22) Date de dépôt: 18.03.2025
(51) Int. Cl.: G01S 7/41, G01S 13/89, G01S 7/295, G01S 7/292, G01S 13/02, G06F 3/01, G01S 13/76, G01S 13/931

(54) **DISPOSITIF RADAR DE DETECTION DE MOUVEMENT**

(30) Priorité: 28.03.2024 FR 2403169
(71) Demandeur: STMicroelectronics International N.V., 1228 Plan-les-Ouates, Geneva (CH)
(72) Inventeur: DUPEYROUX, Julien, 38500 LA BUISSE (FR)
(74) Mandataire: Cabinet Beaumont

(57) **Abrégé**

La présente description concerne un dispositif radar de détection de mouvement (100) comprenant au moins :
- un circuit d'émission - réception (104) configuré pour émettre une séquence d'ondes radars et recevoir une séquence d'ondes radars réfléchies ;
- un circuit mémoire (106) configuré pour mémoriser au moins une première image matricielle représentative d'une distribution spatio-temporelle de l'énergie des ondes radars réfléchies ;
- un circuit de traitement (108) configuré pour mettre en œuvre au moins une comparaison, à partir d'au moins une partie de la première image matricielle, de la distribution spatio-temporelle de l'énergie des ondes radars réfléchies avec une distribution spatio-temporelle d'énergie attendue pour au moins un mouvement destiné à être détecté.

## Description

### Domaine technique

La présente description concerne de façon générale le domaine des dispositifs de détection de mouvement.

### Technique antérieure

De nombreux véhicules sont équipés d'un dispositif permettant de commander une ouverture et une fermeture de la porte du coffre du véhicule sans que l'utilisateur du véhicule ait à presser un bouton de commande. Un tel dispositif améliore grandement le confort de l'utilisateur lorsque ses mains ne sont pas libres, par exemple lorsqu'il transporte un objet volumineux ou lorsqu'il est physiquement incapable d'ouvrir et fermer manuellement la porte du coffre.

Typiquement, un tel dispositif comporte un capteur radar à ondes millimétriques, ou mmWave (« millimeter wave » en anglais) dont les fréquences sont généralement comprises entre 40 GHz et 300 GHz et qui produit des images basées sur l'effet Doppler. Ces images sont traitées par des outils informatiques utilisant par exemple de l'intelligence artificielle tels que des techniques de classification, pour détecter un mouvement attendu généré par l'utilisateur à l'arrière du véhicule, généralement un mouvement de « coup de pied », c'est-à-dire un aller-retour rapide du pied, effectué sous le bouclier arrière du véhicule.

De tels dispositifs sont toutefois sensibles au bruit. En effet, ces dispositifs radars à ondes millimétriques utilisent des signaux radars de forte amplitude. Or, plus l'amplitude du signal radar est importante, plus l'écho reçu destiné à être traité par le dispositif est important et plus les échos parasites sont également importants, ce qui peut gêner le traitement du signal d'écho reçu.

De plus, un tel dispositif est généralement embarqué dans le véhicule, ce qui peut générer des interférences avec les autres dispositifs radars présents dans le véhicule, et conduire à une destruction partielle ou totale de la partie utile des données à traiter pour détecter le mouvement. Cela implique la mise en œuvre de techniques de filtrage pouvant être coûteuses, en particulier lorsque celles-ci sont embarquées, et engendre également un risque de détections erronées.

En outre, les outils d'intelligence artificielle utilisés pour traiter les échos radars reçus nécessitent un apprentissage spécifique qui peut ne pas être compatible avec tous les types ou modèles de véhicules, cet apprentissage pouvant être nécessaire pour chaque modèle différent, voire même pour chaque véhicule. En outre, ces solutions sont souvent très consommatrices en ressources informatiques. Enfin, en fonction de la séquence d'apprentissage utilisée, cette solution peut ne pas être robuste dans le temps.

### Résumé de l'invention

Il existe un besoin de proposer un dispositif radar de détection de mouvement ne présentant pas au moins une partie des inconvénients des solutions connues.

Un mode de réalisation pallie tout ou partie des inconvénients des dispositifs radars de détection de mouvement connus et propose un dispositif radar de détection de mouvement comprenant au moins :
- un circuit d'émission - réception configuré pour émettre une séquence d'ondes radars et recevoir une séquence d'ondes radars réfléchies, ou échos radars ;
- un circuit mémoire configuré pour mémoriser au moins une première image matricielle représentative d'une distribution spatio-temporelle de l'énergie des ondes radars réfléchies ;
- un circuit de traitement configuré pour mettre en œuvre au moins une comparaison, à partir d'au moins une partie de la première image matricielle, de la distribution spatio-temporelle de l'énergie des ondes radars réfléchies avec une distribution spatio-temporelle d'énergie attendue pour au moins un mouvement destiné à être détecté.

Selon un mode de réalisation particulier, le circuit de traitement est configuré tel que la comparaison mise en œuvre comporte une application d'une transformée de Hough sur ladite au moins une partie de la première image matricielle, et configuré pour déterminer la valeur d'une première variable de détection du mouvement en fonction au moins de valeurs de pentes de droites obtenues par l'application de la transformée de Hough sur ladite au moins une partie de la première image matricielle.

Selon un mode de réalisation particulier, le circuit de traitement est configuré pour déterminer que le mouvement est détecté si au moins :
- les valeurs absolues des pentes de deux droites obtenues par l'application de la transformée de Hough sont égales et que les valeurs de ces pentes sont opposées, ou
- une différence entre les valeurs absolues des pentes de deux droites obtenues par l'application de la transformée de Hough est inférieure à une valeur seuil de différence de pentes et que les valeurs de ces pentes sont opposées.

Selon un mode de réalisation particulier, le circuit de traitement est configuré pour déterminer que le mouvement est détecté si, en outre, une différence entre les sommes de valeurs de pixels par lesquels passent chacune des deux droites est inférieure à une valeur seuil de différence de sommes de valeurs de pixels et/ou les sommes de valeurs de pixels de chacune des deux droites sont inférieures à celles de droites prédéfinies.

Selon un mode de réalisation particulier, le circuit de traitement est configuré tel que la comparaison mise en œuvre comporte au moins un calcul d'une corrélation entre ladite au moins une partie de la première image matricielle et au moins une deuxième image matricielle dans laquelle une première partie des pixels ont leurs valeurs définies à une valeur maximale et une deuxième partie des pixels ont leurs valeurs définies à une valeur minimale, et configuré pour déterminer la valeur d'une deuxième variable de détection du mouvement en fonction d'un résultat de comparaison entre au moins une caractéristique statistique d'un résultat de la corrélation calculée et une valeur seuil de corrélation.

Selon un mode de réalisation particulier, le circuit de traitement est configuré tel que la caractéristique statistique correspond à :
- la somme des valeurs des pixels d'une troisième image matricielle correspondant au résultat de la corrélation calculée, ou
- la valeur maximale des pixels de la troisième image matricielle, ou
- la valeur moyenne des pixels de la troisième image matricielle, ou
- la valeur du rapport entre l'écart-type et la moyenne des valeurs des pixels de la troisième image matricielle.

Selon un mode de réalisation particulier, le circuit de traitement est configuré tel que la première partie des pixels de la deuxième image matricielle correspond à au moins une région de plus forte énergie de la distribution spatio-temporelle d'énergie attendue.

Selon un mode de réalisation particulier, le circuit de traitement est configuré tel que la comparaison est mise en œuvre entre une position d'une valeur maximale de chacune des ondes radars réfléchies et des positions attendues d'une valeur maximale d'une énergie engendrée par le mouvement destiné à être détecté, et configuré pour déterminer la valeur d'une troisième variable de détection du mouvement en fonction de différences entre la position de la valeur maximale de chacune des ondes radars réfléchies et des positions attendues de la valeur maximale de l'énergie engendrée par le mouvement destiné à être détecté.

Selon un mode de réalisation particulier, le circuit de traitement est configuré tel que la comparaison mise en œuvre comporte au moins :
- un calcul d'un premier vecteur comprenant des valeurs de positions des valeurs maximales des ondes radars réfléchies ;
- un calcul d'une corrélation croisée entre au moins une partie du premier vecteur et au moins une partie d'un deuxième vecteur comprenant des valeurs de positions attendues de la valeur maximale de l'énergie engendrée par le mouvement destiné à être détecté ;
- une comparaison d'une valeur de la corrélation croisée calculé avec une valeur seuil de corrélation croisée.

Selon un mode de réalisation particulier, le circuit de traitement est configuré pour confirmer la détection ou non du mouvement en fonction de la valeur d'au moins l'une des première, deuxième et troisième variables de détection.

Selon un mode de réalisation particulier, le circuit de traitement est configuré pour mettre en œuvre, avant la comparaison, une sélection d'une partie de la première image matricielle, la comparaison étant ensuite mise en œuvre à partir de la partie sélectionnée de la première image matricielle.

Selon un mode de réalisation particulier, le circuit de traitement est configuré pour mettre en œuvre, avant la comparaison, une normalisation des valeurs des pixels de ladite au moins une partie de la première image matricielle et un seuillage des valeurs normalisées des pixels de ladite au moins une partie de la première image matricielle, et la comparaison est mise en œuvre à partir des valeurs normalisées et seuillées des pixels de ladite au moins une partie de la première image matricielle.

Selon un mode de réalisation particulier, le circuit de traitement est configuré pour mettre en œuvre, avant la comparaison, une convolution de ladite au moins une partie de la première image matricielle et d'un noyau, et la comparaison est mise en œuvre ensuite à partir d'une image matricielle résultante de la convolution de ladite au moins une partie de la première image matricielle et du noyau.

Selon un mode de réalisation particulier, le circuit d'émission - réception est configuré pour émettre et recevoir des ondes radars de type UWB, et pour émettre la séquence d'ondes radars lorsqu'un utilisateur est détecté à proximité du dispositif radar de détection de mouvement.

Il est également proposé un véhicule comprenant au moins une porte de coffre dont l'ouverture et/ou la fermeture est commandée par un dispositif radar de détection de mouvement.

Il est également proposé un procédé de détection de mouvement, comprenant au moins :
- émission d'une séquence d'ondes radars ;
- réception d'une séquence d'ondes radars réfléchies ;
- mémorisation d'au moins une première image matricielle représentative d'une distribution spatio-temporelle de l'énergie des ondes radars réfléchies ;
- comparaison, à partir d'au moins une partie de la première image matricielle, de la distribution spatio-temporelle de l'énergie des ondes radars réfléchies avec une distribution spatio-temporelle d'énergie attendue pour au moins un mouvement destiné à être détecté.

Selon un mode de réalisation particulier, le procédé comprend en outre, avant la comparaison, une sélection d'une partie de la première image matricielle, la comparaison étant ensuite mise en œuvre à partir de la partie sélectionnée de la première image matricielle.

Selon un mode de réalisation particulier, le procédé comprend en outre, avant la comparaison, une normalisation des valeurs des pixels de ladite au moins une partie de la première image matricielle et un seuillage des valeurs normalisées des pixels de ladite au moins une partie de la première image matricielle, la comparaison étant ensuite mise en œuvre à partir des valeurs normalisées et seuillées des pixels de ladite au moins une partie de la première image matricielle.

Selon un mode de réalisation particulier, le procédé comprend en outre, avant la comparaison, une convolution de ladite au moins une partie de la première image matricielle et d'un noyau, la comparaison étant ensuite mise en œuvre à partir d'une image matricielle résultante de la convolution de ladite au moins une partie de la première image matricielle et du noyau.

Selon un mode de réalisation particulier, le procédé comprend en outre, avant l'émission de la séquence d'ondes radars, une détection d'un utilisateur à proximité d'un dispositif radar de détection de mouvement mettant en œuvre le procédé, l'émission de la séquence d'ondes radars étant ensuite mise en œuvre si l'utilisateur est détecté comme étant à proximité du dispositif.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
- la figure 1 représente schématiquement un véhicule comprenant un dispositif radar de détection de mouvement selon un mode de réalisation particulier ;
- la figure 2 représente schématiquement un dispositif radar de détection de mouvement selon un mode de réalisation particulier ;
- la figure 3 représente schématiquement un exemple d'image matricielle représentative d'une distribution spatio-temporelle de l'énergie d'ondes radars réfléchies et reçues par un dispositif radar de détection de mouvement selon un mode de réalisation particulier ;
- la figure 4 représente schématiquement des étapes de traitement d'une image matricielle représentative d'une distribution spatio-temporelle de l'énergie d'ondes radars réfléchies et reçues par le dispositif radar de détection de mouvement, mises en œuvre par un circuit de traitement d'un dispositif radar de détection de mouvement selon un mode de réalisation particulier ;
- la figure 5 représente schématiquement un exemple de sélection d'une partie d'une image matricielle, mise en œuvre par un circuit de traitement d'un dispositif radar de détection de mouvement selon un mode de réalisation particulier ;
- la figure 6 représente schématiquement des exemples de convolutions mises en œuvre par un circuit de traitement d'un dispositif radar de détection de mouvement selon un mode de réalisation particulier ;
- la figure 7 représente schématiquement des exemples de normalisations et de seuillages, mis en œuvre par un circuit de traitement d'un dispositif radar de détection de mouvement selon un mode de réalisation particulier ;
- la figure 8 représente un exemple de droites obtenues par l'application d'une transformée de Hough sur une image matricielle, mise en œuvre par un circuit de traitement d'un dispositif radar de détection de mouvement selon un mode de réalisation particulier ;
- la figure 9 représente un exemple de droites utilisées lors de l'application d'une transformée de Hough rapide sur une image matricielle, mise en œuvre par un circuit de traitement d'un dispositif radar de détection de mouvement selon un mode de réalisation particulier ;
- la figure 10 représente schématiquement des exemples de calculs de corrélations entre des images matricielles, mis en œuvre par un circuit de traitement d'un dispositif radar de détection de mouvement selon un mode de réalisation particulier ;
- la figure 11 représente schématiquement des exemples de masques utilisés lors de calculs de corrélations entre des images matricielles mis en œuvre par un circuit de traitement d'un dispositif radar de détection de mouvement selon un mode de réalisation particulier ;
- la figure 12 représente schématiquement une comparaison entre des positions de valeurs maximales d'ondes radars réfléchies et reçues par un dispositif radar de détection de mouvement et des positions attendues pour un mouvement destiné à être détecté, mise en œuvre par un circuit de traitement d'un dispositif radar de détection de mouvement selon un mode de réalisation particulier.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, différents éléments (circuit d'émission - réception d'ondes radars, circuit mémoire, circuit de traitement, etc.) du dispositif radar de détection de mouvement ne sont pas détaillés. L'homme du métier sera à même de réaliser de manière détaillée ces éléments à partir de la description fonctionnelle donnée ici.

En outre, dans la description ci-dessous du dispositif radar de détection de mouvement servant à la commande d'ouverture et de fermeture d'une porte de coffre d'un véhicule, les autres éléments, composants et/ou circuits servant à la commande de l'ouverture et de la fermeture de la porte de coffre du véhicule ne sont pas décrits.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures, dans une position normale d'utilisation.

Sauf précision contraire, les expressions "environ", "approximativement", "sensiblement", et "de l'ordre de" signifient à 10 % ou à 10° près, de préférence à 5 % ou à 5° près.

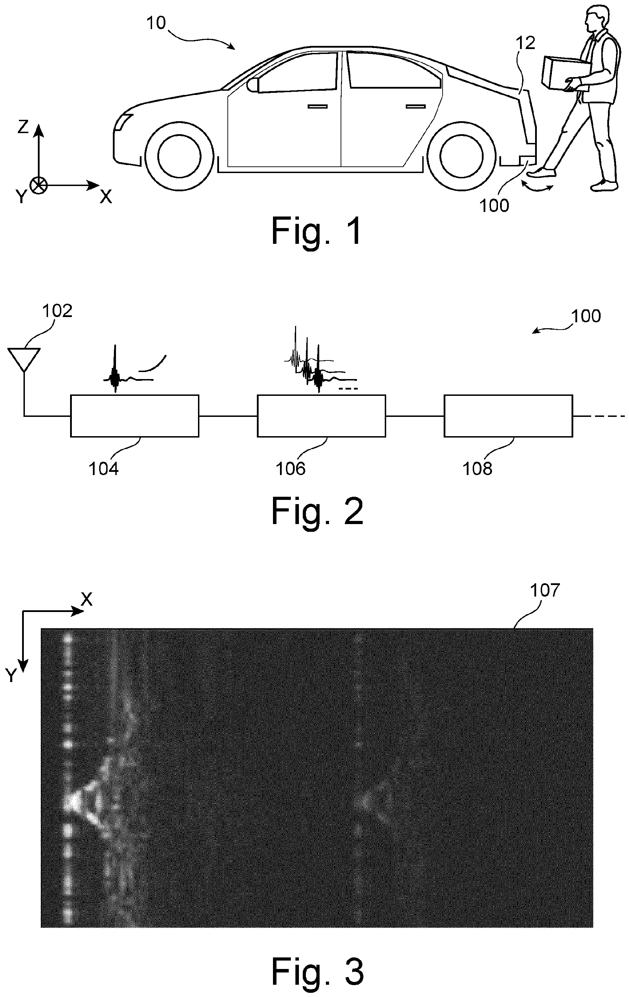

La figure 1 représente schématiquement un exemple de véhicule 10 comprenant un dispositif radar de détection de mouvement 100 selon un mode de réalisation particulier. Sur l'exemple de la figure 1, le véhicule 10 correspond à une automobile. En variante, le véhicule 10 peut être un véhicule différent d'une automobile.

Dans l'exemple décrit, le dispositif 100 est destiné à commander une ouverture et/ou une fermeture de la porte du coffre 12 du véhicule 10 sans que l'utilisateur ait à presser un bouton de commande. Le dispositif 100 est ici disposé à l'arrière du véhicule 10, sous le coffre du véhicule 10 et par exemple sous ou dans le bouclier arrière du véhicule 10. En variante, le dispositif 100 peut être disposé à l'intérieur du véhicule 10, par exemple dans le coffre du véhicule 10. En outre, le long de la largeur du véhicule 10 (parallèle à l'axe Y représenté sur la figure 1), le dispositif 100 est par exemple disposé au centre de cette largeur. D'autres dispositions du dispositif 100 sont toutefois possibles en fonction du rôle du dispositif 100 qui peut être utilisé pour commander autre chose qu'une ouverture et/ou une fermeture de porte de coffre.

Dans l'exemple de réalisation décrit, le dispositif 100 est destiné à détecter si l'utilisateur effectue, sous le bouclier arrière du véhicule 10, un mouvement de « coup de pied », c'est-à-dire un aller-retour rapide du pied sous le bouclier arrière du véhicule 10, comme représenté symboliquement sur la figure 1.

La figure 2 représente schématiquement un exemple de réalisation du dispositif 100.

Le dispositif 100 comporte au moins une antenne 102 destinée à émettre des ondes radars et à recevoir, ou détecter, ensuite les ondes radars réfléchies. L'orientation de l'antenne 102 peut dépendre notamment de l'angle d'ouverture de l'antenne 102, mais également de la forme, ou géométrie, de la partie du véhicule 10 dans laquelle le dispositif 100 est localisé afin de limiter les interférences non-souhaitées pouvant être générées dans cette partie du véhicule 10. Par exemple, sur l'exemple de la figure 1, l'antenne 102 du dispositif 100 peut être orientée telle que les ondes soient émises depuis le dispositif 100 en direction du sol en formant un angle égal à environ 30° par rapport à l'axe Z, en direction de l'arrière du véhicule 10. En variante, le dispositif 100 peut comporter une première antenne destinée l'émission des ondes radars et une deuxième antenne, distincte de la première antenne, destinée à la réception des ondes radars réfléchies.

Dans l'exemple de réalisation décrit, les ondes radars destinées à être émises et détectées, après réflexion, par le dispositif 100 sont de type UWB (Ultra Large Bande, ou « Ultra-Wideband » en anglais). De telles ondes radars UWB ont par exemple une fréquence comprise entre 3,1 GHz et 10,6 GHz. En outre, le dispositif 100 peut être configuré pour émettre des ondes radars sur n'importe quel canal défini par la norme IEEE 802.15.4/4z/4ab. Chacune des ondes radars UWB émises par le dispositif 100 a par exemple une durée de l'ordre de 2 nanosecondes et une très faible amplitude, par exemple telle que la densité spectrale de puissance maximale soit de -41,3 dBm/MHz à 500 MHz, et -61,3 dBm/MHz pour les bandes de fréquences supérieures à 500 MHz.

En outre, dans l'exemple de réalisation décrit, le dispositif 100 est configuré pour mettre en œuvre une détection de mouvement telle que décrite ci-dessous lorsque l'utilisateur est détecté à proximité du dispositif 100. Ainsi, préalablement aux étapes relatives à la détection de mouvement, une détection et un calcul d'une distance vis-à-vis d'un dispositif apte à communiquer avec le dispositif 100 et destiné à être porté par un utilisateur du véhicule 10 est mise en œuvre par le dispositif 100. Une telle distance peut être calculée en se basant sur la durée du trajet des ondes radar entre le dispositif 100 et le dispositif communiquant avec le dispositif 100. Le dispositif apte à communiquer avec le dispositif 100 correspond par exemple à une étiquette UWB, ou « UWB tag » en anglais, par exemple intégrée à une clé ou une carte du véhicule 10, ou un dispositif portatif tel qu'un smartphone. Ainsi, le dispositif 100 peut mettre en œuvre ces étapes relatives à la détection de mouvement (fonctionnement en mode « radar » du dispositif 100) uniquement si l'utilisateur est détecté à proximité du véhicule 10 (fonctionnement en mode « ranging » du dispositif 100), par exemple à une distance inférieure à 1 mètre, ce qui permet par exemple d'éviter des détections de mouvements involontaires lorsque l'utilisateur n'est pas à proximité du dispositif 100 et donc qu'une ouverture du coffre du véhicule 10 n'est pas souhaitée.

Lorsque le dispositif 100 est configuré pour émettre et recevoir des ondes UWB, il est possible de réaliser la détection de mouvement et la détection de distance avec les mêmes circuits grâce à la polyvalence des caractéristiques des ondes UWB qui évitent d'avoir à utiliser des capteurs différents pour ces deux modes de fonctionnement. De plus, l'utilisation d'ondes UWB a également pour avantage de limiter le risque d'interférences destructrices pouvant affecter la partie utile du signal et permet d'avoir moins d'échos étant donné que les impulsions émises sont principalement absorbées par les objets rencontrés sur leur trajet. En outre, l'utilisation d'ondes UWB requiert peu de prétraitement des informations et offre une bonne sécurité vis-à-vis des risques de piratage.

Un autre avantage de l'utilisation d'ondes UWB est que les propriétés des signaux UWB (c'est-à-dire les canaux distincts et l'utilisation de codes pour l'authentification) améliorent également les performances globales et la sécurité du dispositif 100 par rapport aux systèmes radars standards.

Le dispositif 100 comporte en outre un circuit 104 d'émission - réception des ondes radars. Un tel circuit 104 peut notamment comporter un amplificateur faible bruit, ou LNA (« Low-Noise Amplifier » en anglais), un ou plusieurs filtres, un corrélateur de signaux, un comparateur, etc. Le circuit 104 comporte une entrée et une sortie couplées à l'antenne 102. Lorsque le dispositif 100 comporte des antennes distinctes pour l'émission et la réception des ondes radars, le dispositif 100 peut comporter plusieurs circuits d'émission - réception distincts.

Pour réaliser une détection de mouvement, le circuit 104 est configuré pour émettre une séquence d'ondes radars pendant une certaine durée. Cette durée peut être choisie telle qu'elle couvre au moins la durée pendant laquelle l'utilisateur est destiné à réaliser le mouvement destiné à être détecté par le dispositif 100. Par exemple, cette durée peut être comprise entre 3 et 10 secondes. En outre, le dispositif 100 peut être tel que la distance sur laquelle la détection radar est réalisée soit comprise entre 0 et 1 mètre à partir de la carrosserie du véhicule.

Le dispositif 100 comporte également un circuit mémoire 106 qui, sur l'exemple de la figure 2, comporte une entrée couplée à une sortie du circuit 104. A la réception, par l'antenne 102 et le circuit 104, d'ondes radars réfléchies, les données relatives à ces ondes radars réfléchies sont envoyées par le circuit 104 au circuit mémoire 106. Le circuit mémoire 106 est configuré pour mémoriser au moins une première image matricielle représentative d'une distribution spatio-temporelle de l'énergie des ondes radars réfléchies.

Un exemple d'une telle image matricielle 107 formée à partir des ondes radars réfléchies et reçues par le dispositif 100 est représenté sur la figure 3. Chaque ligne (parallèle à l'axe X de la figure 3) de cette image représente l'énergie présente dans l'une des ondes radars réfléchies et reçues par le dispositif 100, et correspond à une réponse impulsionnelle de canal (ou CIR pour « Channel Impulse Response » en anglais) acquise par le dispositif 100. Chacune des lignes de l'image matricielle 107 représente le niveau d'énergie détecté à un instant donné en fonction de la distance par rapport au dispositif 100. Ainsi, les ondes radars réfléchies et reçues successivement dans le temps par le dispositif 100 sont représentées par des lignes agencées les unes sous les autres le long de l'axe Y de la figure 3. Chaque colonne (parallèle à l'axe Y de la figure 3) de cette image représente la variation dans le temps de l'énergie captée par les ondes radars à une certaine distance du dispositif 100. Sur l'exemple de la figure 3, le côté gauche de l'image matricielle 107 correspond au côté le plus proche du dispositif 100. De plus, sur cet exemple, plus l'énergie détectée est importante, plus la couleur du pixel correspondant à cette énergie détectée est claire. Par exemple, pour une durée de détection comprise entre 3 et 10 secondes et une fréquence d'émission des ondes radars de l'ordre de 15 Hz, l'image matricielle 107 peut comporter un nombre de lignes compris entre environ 45 et 150 et un nombre de colonnes compris entre environ 33 et 100 si les ondes radars sont émises dans un rayon de distance de l'ordre de 1 mètre ou entre environ 100 et 300 si les ondes radars sont émises dans un rayon de distance de l'ordre de 3 mètres.

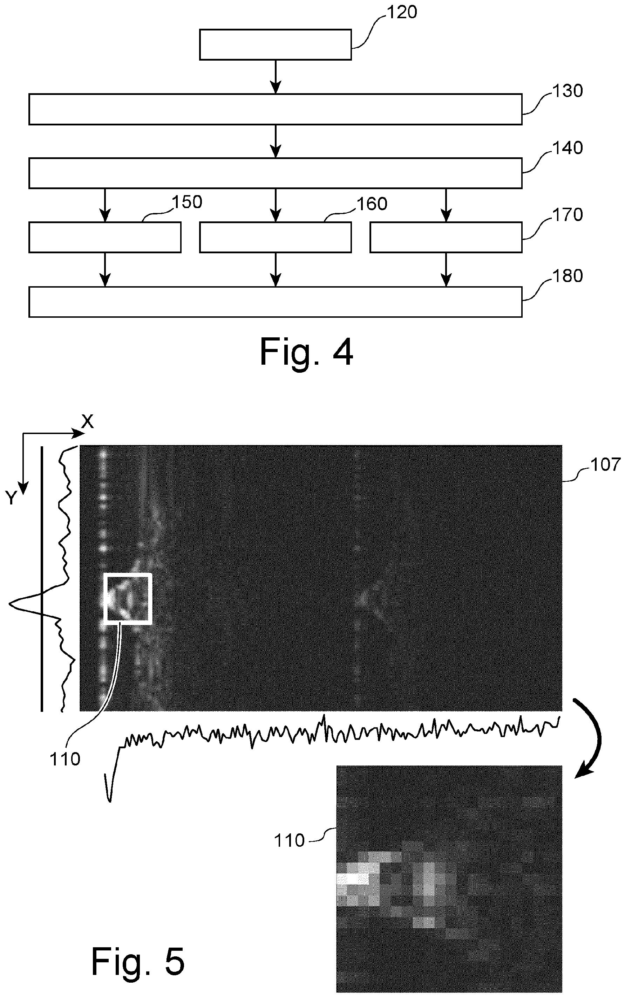

Après la mémorisation de l'image matricielle obtenue grâce à la détection des ondes radars réfléchies, le dispositif 100 met en œuvre des étapes de traitement de l'image matricielle mémorisée afin de déterminer si un mouvement attendu, ou destiné à être détecté par le dispositif 100, peut être considéré comme étant détecté ou non. Ces étapes de traitement vont permettre de réaliser une comparaison, à partir d'au moins une partie de l'image matricielle 107, de la distribution spatio-temporelle de l'énergie des ondes radars réfléchies avec une distribution spatio-temporelle d'énergie attendue pour au moins un mouvement destiné à être détecté. Le dispositif 100 comporte un circuit de traitement 108 configuré pour mettre en œuvre ces étapes. La figure 4 représente schématiquement un exemple de mise en œuvre de ces étapes de traitement.

Dans un mode de réalisation particulier, le circuit de traitement 108 est configuré pour mettre en œuvre une sélection d'une partie de l'image matricielle 107 précédemment mémorisée. Cette sélection est désignée, sur la figure 4, par l'étape 120. Dans cet exemple, cette sélection est mise en œuvre afin de ne conserver que la partie de l'image matricielle 107 la plus pertinente et ainsi mettre en œuvre les étapes suivantes de traitement uniquement sur cette partie de l'image matricielle 107. Cette étape de sélection permet d'aboutir au résultat de la détection ou non du mouvement plus rapidement et/ou avec des ressources de calcul moins importantes.

Lorsque les données de l'image matricielle 107 comportent des nombres complexes (correspondant aux données de sortie fournies par le circuit d'émission - réception 104), le dispositif 100 peut déterminer tout d'abord la valeur absolue de ces nombres complexes. Ces valeurs absolues sont alors mémorisées et utilisées pour la suite de l'étape de sélection. Cette étape de détermination des valeurs absolues des données de l'image matricielle 107 peut ne pas être mise en œuvre si le circuit d'émission - réception 104 est configuré pour délivrer en sortie des données sous la forme de nombres réels.

La mise en œuvre de cette étape de sélection peut comporter ensuite un premier cadrage de l'image réalisant une sélection des colonnes de pixels de l'image matricielle 107 à conserver pour la suite du procédé. Ce premier cadrage permet de sélectionner la plage de distance dans laquelle sont localisées les données radars pertinentes pour déterminer si le mouvement attendu est détecté ou non, et de ne conserver que ces données radars. En considérant l'orientation de l'image matricielle 107 représentée sur la figure 3, ce premier cadrage correspond à un cadrage horizontal de l'image matricielle 107.

Selon un premier exemple, ce premier cadrage peut être réalisé en choisissant arbitrairement les colonnes de pixels à conserver. Par exemple, lorsque le mouvement destiné à être détecté correspond à un mouvement de « coup de pied » de l'utilisateur réalisé sous le bouclier arrière du véhicule 10, il est possible de considérer que les données pertinentes à conserver se trouvent au plus à une distance de 1 mètre du dispositif 100.

Selon un deuxième exemple, ce premier cadrage peut être réalisé en choisissant la colonne de pixels de l'image matricielle 107 présentant l'énergie la plus importante (choix par exemple réalisé en calculant la somme des valeurs des pixels des différentes colonnes de pixels l'image) et en conservant un nombre donné, ou arbitraire, de colonnes de pixels suivantes de l'image matricielle 107. Par exemple, lorsque le mouvement destiné à être détecté correspond à mouvement de « coup de pied » de l'utilisateur réalisé sous le bouclier arrière du véhicule 10, la colonne de pixels de l'image matricielle 107 présentant l'énergie la plus importante correspond à la distance maximale atteinte par le pied de l'utilisateur sous le bouclier arrière du véhicule 10. A partir de cette colonne de pixels d'énergie maximale, il est possible de conserver un nombre de colonnes de pixels suivantes correspondant à une distance comprise entre 50 cm et 80 cm par rapport à la colonne de pixels d'énergie maximale.

Le premier cadrage réalisé permet de ne pas conserver les données qui concernent des régions de l'espace dans lesquelles l'utilisateur n'effectue pas le mouvement destiné à être détecté, ainsi que d'éventuelles données parasites liées aux effets de couplage de l'antenne ou des antennes du dispositif 100.

L'étape de sélection peut également comporter un deuxième cadrage de l'image matricielle 107 réalisant une sélection des lignes de pixels de l'image matricielle 107 à conserver pour la suite du procédé. Ce deuxième cadrage permet de sélectionner la plage de temps incluant les données radars à considérer pour déterminer si le mouvement attendu est détecté ou non, et de ne conserver que ces données radars. En considérant l'orientation de l'image matricielle 107 représentée sur la figure 3, ce deuxième cadrage correspond à un cadrage vertical de l'image matricielle 107.

Selon un premier exemple, ce deuxième cadrage peut être réalisé en ne conservant qu'un nombre donné, ou arbitraire, de lignes de pixels de chaque côté d'une ligne centrale de pixels correspondant à celle présentant, dans toute l'image matricielle 107, l'énergie la plus importante (choix par exemple réalisé en calculant la somme des valeurs des pixels des différentes lignes de pixels de l'image). Par exemple, de chaque côté de la ligne de pixels présentant l'énergie la plus importante, il est possible de conserver un nombre de lignes de pixels correspondant, au total, à une durée comprise entre 1 et 2 secondes (soit 2 à 4 secondes de signal conservé).

Selon un deuxième exemple, le deuxième cadrage peut être réalisé en ne conservant qu'un nombre donné, ou arbitraire, de lignes de pixels de chaque côté d'une ligne centrale de pixels correspondant à celle dont la position, dans l'image matricielle 107, est définie comme correspondant à la moyenne ou la médiane des positions des lignes de pixels dont la somme des valeurs des pixels dépasse une valeur seuil donnée. Comme pour le premier exemple, de chaque côté de la ligne centrale de pixels ainsi définie, il est possible de conserver un nombre de lignes de pixels correspondant, au total, à une durée comprise entre 1 et 2 secondes.

Dans les exemples ci-dessus concernant le deuxième cadrage, le nombre de lignes de pixels conservées peut être constant et choisi arbitrairement, ou bien calculé de manière statistique en considérant par exemple le niveau de bruit dans chacune des lignes de pixels, ou bien l'écart type ou la moyenne entre les valeurs des pixels de chaque ligne de pixels de l'image matricielle 107.

A l'issue des premier et deuxième cadrages, la sélection de la partie de l'image matricielle 107 destinée à être traitée pour la détection de mouvement est alors achevée.

La figure 5 représente schématiquement une partie 110 de l'image matricielle 107 sélectionnée à l'issue de la mise en œuvre des étapes précédemment décrites. Sur la figure 5, l'énergie les différentes lignes et colonnes de pixels est représentée schématiquement en bordure de l'image matricielle 107. La partie 110 correspond à la partie de l'image matricielle 107 dans laquelle sont localisés les pics d'énergie. Dans une réalisation particulière, la partie sélectionnée 110 de l'image matricielle 107 peut former une image matricielle carrée, c'est-à-dire dont le nombre de lignes de pixels est égal au nombre de colonnes de pixels, et par exemple de l'ordre de 20.

En variante de l'exemple décrit ci-dessus, il est possible que le deuxième cadrage soit réalisé avant le premier cadrage. Selon une autre variante, il est possible que cette sélection d'une partie de l'image matricielle 107 ne soit pas mise en œuvre et que les étapes suivantes mises en œuvre par le circuit de traitement 108 le soient à partir de l'image matricielle 107 complète.

Dans l'exemple de réalisation particulier décrit, le circuit 108 du dispositif 100 est configuré pour mettre en œuvre, après l'étape de sélection 120, une convolution de l'image matricielle 107, et plus particulièrement de la partie sélectionnée 110 de l'image matricielle 107 compte tenu de la précédente étape de sélection 120 mise en œuvre dans cet exemple, et d'un noyau (étape 130). Le noyau, ou matrice de convolution, utilisé pour cette convolution peut correspondre à une matrice carrée de taille 3x3, ou 5x5, ou 7x7, etc. Le noyau peut être Gaussien ou bien correspondre à un noyau comportant des valeurs identiques, ou bien encore comporter des valeurs différentes et permettre par exemple d'appliquer un filtre passe-bas à la partie 110 de l'image matricielle 107. En variante, le noyau peut comporter des valeurs telles que la convolution réalise un filtrage plus important soit sur l'axe de l'image matricielle 107 correspondant à la distance de détection vis-à-vis du dispositif 100 (axe X sur l'exemple de la figure 3), soit sur l'axe de l'image matricielle 107 correspondant à l'axe temporel (axe Y sur l'exemple de la figure 3). La mise en œuvre d'une telle convolution permet de réaliser un filtrage tout en réduisant les ressources de calcul nécessaires par rapport à un filtrage classique.

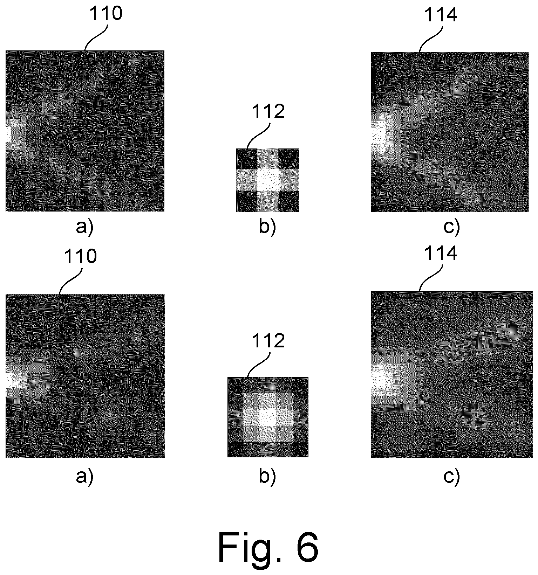

La figure 6 représente des exemples de convolutions mises en œuvre sur une partie 110 de l'image matricielle 107. Sur cette figure, l'image a) représente une partie sélectionnée 110 de l'image matricielle 107, l'image b) représente un premier noyau 112 (correspondant, dans cet exemple, à une matrice gaussienne de dimensions 3x3) et l'image c) représente une image matricielle 114 résultante de la convolution réalisée entre la partie 110 a) et le noyau 112 de l'image b). En outre, sur cette figure, l'image d) représente une partie 110 de l'image matricielle 107, l'image e) représente un deuxième noyau 112 (correspondant, dans cet exemple, à une matrice gaussienne de dimensions 5x5) et l'image f) représente une image matricielle 114 résultante de la convolution réalisée entre la partie 110 d) et le noyau 112 de l'image e).

Une telle étape de convolution peut permettre de réduire le bruit présent dans la partie 110 de l'image matricielle 107 et/ou éliminer d'éventuelles valeurs aberrantes présentes dans la partie 110 de l'image matricielle 107, et améliorer ainsi la détection de mouvement réalisée par le dispositif 100. En variante, cette étape de convolution peut ne pas être mise en œuvre par le circuit de traitement 108.

Dans l'exemple de réalisation particulier décrit, le circuit 108 du dispositif 100 est configuré pour mettre en œuvre, après l'étape de sélection 120 (et avant ou après la convolution 130 précédemment décrite si cette convolution 130 est mise en œuvre), une étape 140 de normalisation des valeurs des pixels de l'image matricielle 107, et plus particulièrement de la partie sélectionnée 110 de l'image matricielle 107 compte tenu de la précédente étape de sélection 120 mise en œuvre dans cet exemple, et un seuillage, c'est-à-dire une sélection des pixels en fonction d'une comparaison de leurs valeurs par rapport à une valeur seuil, des valeurs normalisées des pixels de l'image matricielle 107 (de la partie 110 de l'image matricielle 107 dans cet exemple).

Selon un premier exemple, la normalisation mise en œuvre peut comporter une soustraction, à la valeur de chacun des pixels, d'une valeur moyenne des pixels de la partie sélectionnée 110 de l'image matricielle 107, et une division des valeurs ainsi obtenues par l'écart-type de ces valeurs.

Selon un deuxième exemple, la normalisation mise en œuvre peut comporter une soustraction, à la valeur de chacun des pixels, de la valeur minimale des pixels, et une division des valeurs ainsi obtenues par la valeur maximale de ces valeurs.

Selon un troisième exemple, la normalisation mise en œuvre peut comporter une soustraction, à la valeur de chacun des pixels, d'une valeur constante (choisie arbitrairement ou basée sur des paramètres de l'image tels que son niveau de bruit), et une division des valeurs obtenues par la valeur maximale de ces valeurs.

Dans les trois exemples ci-dessus, si des valeurs négatives sont obtenues, elles peuvent être définies comme étant égales à 0.

Selon un quatrième exemple, la normalisation mise en œuvre peut comporter une division des valeurs de chaque pixel de l'image par la valeur maximale des pixels de l'image.

Après la normalisation des valeurs des pixels de l'image, un seuillage des valeurs normalisées des pixels est mis en œuvre.

Selon un premier exemple, le seuillage peut correspondre à une opération consistant à ne conserver que les valeurs des pixels dépassant une valeur seuil et à définir à une valeur nulle les valeurs des autres pixels.

Selon un deuxième exemple, le seuillage peut correspondre à une opération consistant à définir à une valeur maximale tous les pixels dont la valeur dépasse une valeur seuil et à définir à une valeur nulle les autres pixels (ce qui correspond à une conversion binaire de l'image).

Dans ces exemples de seuillage, la valeur seuil peut être constante, et prédéfinie ou définie dynamiquement sur la base de paramètres statistiques des valeurs des pixels de l'image comme par exemple l'écart-type entre ces valeurs ou le rapport signal sur bruit de l'image. Selon une variante, la valeur seuil peut ne pas être constante et diminuer en fonction de la distance R par rapport au dispositif 100, par exemple en suivant une courbe en 1/*R*⁴, ce qui permet d'obtenir une image en accord avec l'atténuation se produisant naturellement avec l'augmentation de la distance.

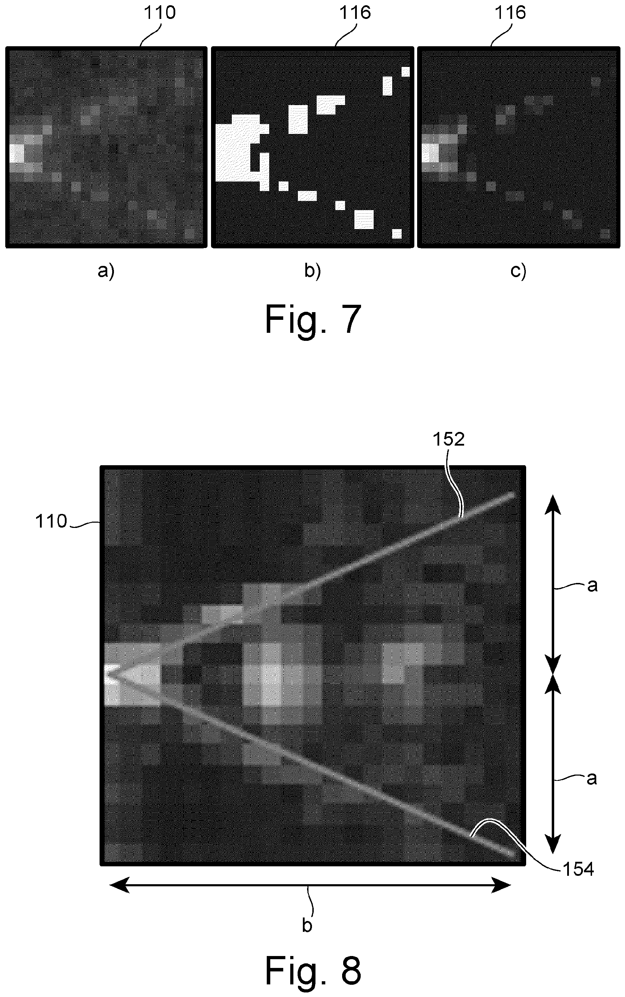

La figure 7 représente des exemples de résultats obtenus après l'application des opérations de normalisation et de seuillage précédemment décrites sur une partie sélectionnée 110 de l'image matricielle 107. Sur cette figure, l'image a) représente une partie sélectionnée 110 de l'image matricielle 107, l'image b) représente un exemple d'image résultante 116 obtenue après l'application d'un exemple de normalisation et de seuillage conduisant à une conversion binaire de l'image, et l'image c) représente un exemple d'image résultante 116 obtenue après l'application d'un autre exemple de normalisation et de seuillage.

En variante, cette étape 130 peut comporter la mise œuvre d'un seuillage seul et non d'une normalisation.

Le circuit de traitement 108 du dispositif 100 est configuré pour mettre en œuvre, après la sélection 120 et/ou la convolution et/ou la normalisation et/ou le seuillage des valeurs des pixels précédemment décrites en fonction des étapes mises en œuvre, une comparaison de la distribution spatio-temporelle de l'énergie des ondes radars réfléchies avec une distribution spatio-temporelle attendue pour le mouvement destiné à être détecté par le dispositif 100. Dans l'exemple décrit, cette comparaison va correspondre à la mise en œuvre d'au moins une des étapes distinctes référencées 150, 160 et 170 et fournissant chacune en sortie une variable de détection dont la valeur est représentative de la détection ou non du mouvement attendu.

A l'étape 150, une transformée de Hough est appliquée sur les données obtenues précédemment, c'est-à-dire les données obtenues en sortie de l'étape de seuillage dans l'exemple décrit. L'application d'une telle transformée de Hough sur les données de l'image revient à rechercher dans l'image des droites passant par les pixels représentatifs de la présence d'énergie, c'est-à-dire les pixels de l'image dans lesquels un mouvement est détecté. La recherche de telles droites dans l'image est pertinente notamment lorsque le mouvement destiné à être détecté par le dispositif 100 correspond à un coup de pied réalisé en regard du dispositif 100, étant donné que le mouvement d'aller-retour réalisé par le pied suit, dans l'image matricielle 107, deux droites passant par une intersection correspondant au moment où le pied de l'utilisateur revient vers sa position initiale.

Selon un premier exemple, la transformée de Hough peut être une transformée de Hough dite standard, conduisant à la recherche dans toute l'image (dans toute la partie 110 de l'image matricielle 107 dans l'exemple décrit ici) de telles lignes droites chacune définies par un point d'origine, une pente et une valeur de la somme des valeurs des pixels par lesquels passe cette droite. La figure 8 représente un exemple de lignes droites, désignées par les références 152 et 154, obtenues par l'application de la transformée de Hough sur la partie 110 de l'image matricielle 107. Dans l'exemple décrit, la pente de chacune de ces droites est définie comme étant égale au rapport de leurs dimensions a/b, avec la dimension a correspondant à la dimension selon l'axe temporel et la dimension b correspondant à la dimension selon l'axe de la distance.

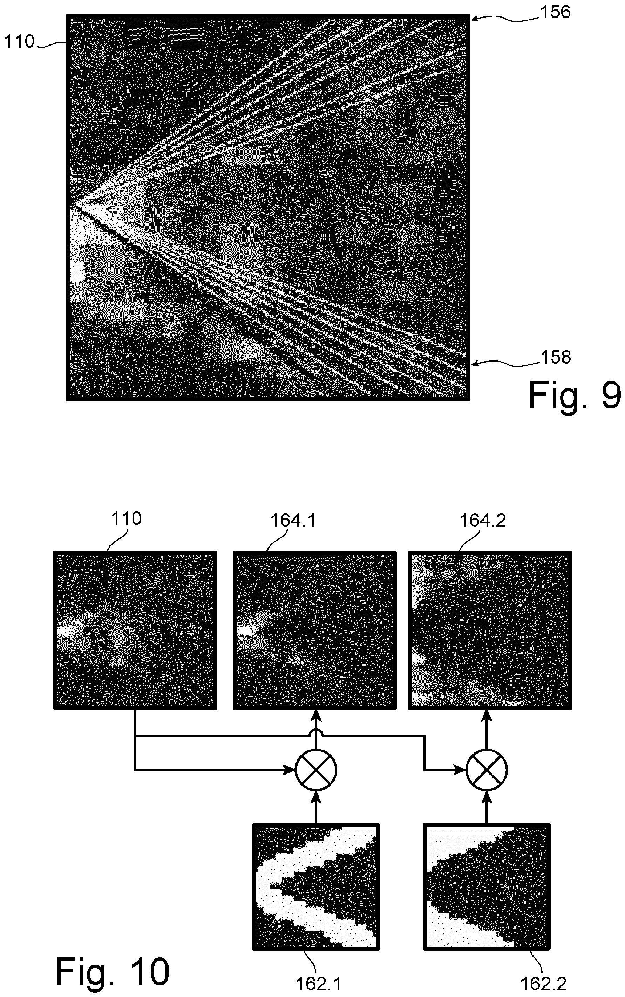

Selon un deuxième exemple, la transformée Hough peut être une transformée de Hough dite rapide (ou « Fast Hough Transform » en anglais), conduisant à la recherche, parmi un ensemble de lignes droites prédéfinies (en choisissant un point d'origine et une gamme restreinte de valeurs de pentes positives et négatives), de celles passant par les pixels représentatifs de la présence d'énergie. A titre d'exemple, l'ensemble de lignes droites prédéfinies peut comporter 5 à 10 lignes droites de pentes positives et 5 à 10 lignes droites de pentes négatives. Comme pour la transformée de Hough dite standard, les lignes droites identifiées sont définies par une pente et une valeur de la somme des valeurs des pixels par lesquels passe cette droite. La figure 9 représente un exemple de deux ensembles de lignes droites prédéfinies 156, 158 utilisées pour l'application d'une transformée de Hough rapide. Ce deuxième exemple peut être avantageux car moins consommateur de ressources de calcul que l'utilisation d'une transformée de Hough dite standard.

Après l'application de la transformée de Hough, au moins une partie des paramètres des droites obtenues (pente et somme des valeurs des pixels) sont utilisés pour déterminer la valeur de la première variable de détection du mouvement, c'est-à-dire déterminer si le mouvement attendu est présent dans l'image matricielle.

Selon un premier exemple, le mouvement peut être considéré comme étant détecté si les valeurs absolues des pentes des deux droites identifiées sont identiques et que ces pentes sont opposées, c'est-à-dire si les deux droites identifiées sont symétriques par rapport à une ligne horizontale de l'image dans l'exemple de réalisation décrit.

Selon un deuxième exemple, le mouvement peut être considéré comme étant détecté si les valeurs absolues des pentes des deux droites identifiées sont identiques et que ces pentes sont opposées, et si une différence entre les sommes des valeurs des pixels par lesquels passent chacune de ces droites ne dépasse pas une certaine valeur seuil, appelée par exemple valeur seuil de différence de sommes de valeurs de pixels.

Selon un troisième exemple, le mouvement peut être considéré comme étant détecté si une différence entre les valeurs absolues des pentes des deux droites identifiées est inférieure ou égale à une certaine valeur seuil, appelée par exemple valeur seuil de différence de pentes, et que ces pentes sont opposées.

Selon un quatrième exemple, le mouvement peut être considéré comme étant détecté si une différence entre les valeurs absolues des pentes des deux droites identifiées est inférieure ou égale à une valeur seuil de différence de pentes et que ces pentes sont opposées, et si les sommes des valeurs des pixels par lesquels passent chacune de ces droites ne dépassent pas une valeur seuil de différence de sommes de valeurs de pixels.

Selon un cinquième exemple, il est possible d'appliquer l'un des quatre précédents exemples et de considérer que le mouvement est détecté si en outre les sommes de valeurs de pixels de chacune des deux droites sont inférieures à celles d'autres droites prédéfinies (par exemple l'ensemble des droites passant par le même point d'origine que celui des droites identifiées, ou bien des droites passant par le même point d'origine et dont les valeurs absolues des pentes sont les plus proches de celles des droites identifiées).

En fonction des caractéristiques des droites identifiées, et selon les critères de l'un des exemples ci-dessus, une première variable de détection est définie comme étant égale à une première valeur ou une deuxième valeur selon que le mouvement attendu soit considéré comme étant détecté ou non, par exemple à une valeur '1' si le mouvement attendu est considéré comme détecté et à une valeur '0' si le mouvement attendu est considéré comme n'ayant pas été détecté.

A l'étape 160, un calcul d'une corrélation entre des données obtenues précédemment, c'est-à-dire les données obtenues en sortie de l'étape de seuillage dans l'exemple décrit, et celles d'une deuxième image matricielle dans laquelle une première partie des pixels ont leurs valeurs définies à une valeur maximale et une deuxième partie des pixels ont leurs valeurs définies à une valeur minimale est réalisée. Dans l'exemple de réalisation décrit, cette corrélation est calculée sur la base des données de la partie sélectionnée 110 de l'image matricielle 107. Cette étape 160 est mise en œuvre pour réaliser une détection du mouvement attendu en calculant le produit de l'image matricielle avec un ou plusieurs masque 2D, correspondant à la ou les deuxièmes images matricielles. La ou les images résultantes de cette corrélation permettent de déterminer si l'énergie de la première image matricielle 107 est présente ou absente de certaines régions définies par le ou les masques, cette détermination pouvant être réalisée par des mesures ou calculs d'une ou plusieurs caractéristiques statistiques de la ou des images résultantes de ce calcul de corrélation et des comparaisons de ces caractéristiques par rapport à des valeurs seuil de corrélation.

La figure 10 représente schématiquement les résultats de deux convolutions mises en œuvre à partir d'une même partie 110 de l'image matricielle 107 et faisant appel à deux masques différents référencés 162.1 et 162.2. Un premier de ces deux masques 162.1 comporte une première partie de ses pixels dont les valeurs sont définies à une valeur maximale et qui correspond aux régions où l'énergie due au mouvement à détecter est destinée à être présente dans la partie 110 de l'image matricielle 107, et une deuxième partie de ses pixels dont les valeurs sont définies à une valeur minimale et qui correspond aux régions où l'énergie due au mouvement à détecter est destinée à être absente dans la partie 110 de l'image matricielle 107. Le deuxième masque 162.2 est, au contraire du premier masque 162.1, tel qu'une première partie de ses pixels dont les valeurs sont définies à une valeur maximale correspond à des régions où l'énergie due au mouvement à détecter est destinée à être absente dans la partie 110 de l'image matricielle 107, et une deuxième partie de ses pixels dont les valeurs dont définies à une valeur minimale qui correspond à des régions où l'énergie due au mouvement à détecter est destinée à être présente dans la partie 110 de l'image matricielle 107. Sur la figure 10, les images résultantes de ces corrélations sont désignées par les références 164.1 et 164.2. Avec de telles corrélations, il est possible de considérer que le mouvement attendu est bien détecté si l'énergie présente dans l'image résultante de la deuxième corrélation est inférieure à celle présente dans l'image résultante de la première corrélation.

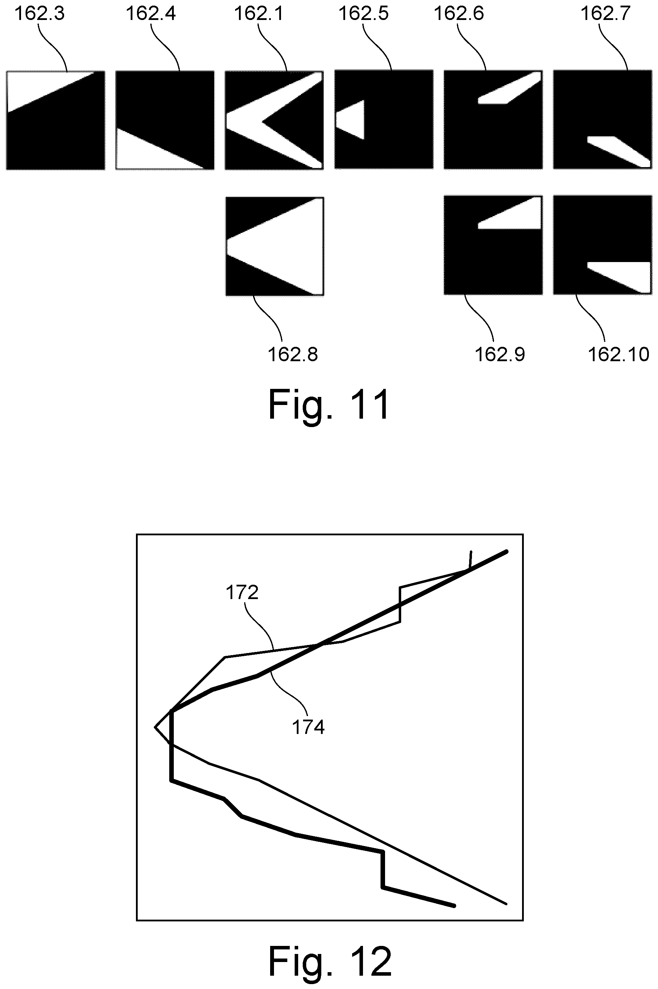

Différents exemples de masques utilisables pour cette étape de corrélation sont représentés sur la figure 11. Dans ces exemples, la combinaison des masques 162.3 et 162.4 forme le deuxième masque 162.1 utilisé dans la deuxième corrélation précédemment décrite en lien avec la figure 10, et le masque 162.1 correspond à celui utilisé pour la première corrélation précédemment décrite en lien avec la figure 10. D'autres exemples de masques 162.5 à 162.10 sont représentés et peuvent être utilisés pour la mise en œuvre de corrélations en substitution ou en remplacement des corrélations précédemment décrites.

A partir de la ou des images résultantes obtenues en mettant en œuvre de telles corrélations, une ou plusieurs des caractéristiques statistiques suivantes de cette ou ces images peuvent être calculées : somme des valeurs de tous les pixels de l'image matricielle résultante, valeur maximale des pixels de l'image matricielle résultante, valeur moyenne des pixels de l'image résultante, coefficient de variation des pixels de l'image résultante (c'est-à-dire le rapport entre l'écart-type et la moyenne de ces valeurs). La ou les valeurs de la ou des caractéristiques statistiques décrites sont ensuite comparées à une ou plusieurs valeurs seuils de corrélation pour déterminer si le mouvement attendu est détecté.

Selon un premier exemple, il est possible de réaliser une corrélation des données de l'image obtenue en sortie de l'étape 140 avec le masque 162.1 de la figure 11, et de calculer si l'un des paramètres statistiques de l'image résultante est supérieur à une valeur seuil de corrélation.

Selon un deuxième exemple, il est possible de réaliser une corrélation des données de l'image obtenue en sortie de l'étape 140 avec le masque 162.8 de la figure 11, et de calculer si l'un des paramètres statistiques de l'image résultante est supérieur à une valeur seuil de corrélation.

Selon un troisième exemple, il est possible de réaliser une première corrélation des données de l'image obtenue en sortie de l'étape 140 avec le masque 162.3 et de déterminer si l'un des paramètres statistiques de l'image résultante est inférieur à une première valeur seuil de corrélation, une deuxième corrélation avec le masque 162.4 et de déterminer si l'un des paramètres statistiques de l'image résultante est inférieur à une deuxième valeur seuil de corrélation, et de réaliser une troisième corrélation correspondant à l'une des celles décrites ci-dessus pour les premier et deuxième exemples.

Selon un quatrième exemple, il est possible de réaliser les corrélations précédemment décrites en lien avec le troisième exemple, ainsi que d'autres corrélations des données de l'image obtenue en sortie de l'étape 140 avec les masques 162.5, 162.6 et 162.7, ou avec les masques 162.5, 162.9 et 162.10, et de déterminer si l'un des paramètres statistiques de chacune des images résultantes est supérieur à une valeur seuil de corrélation.

En variante, il est possible de faire appel à des masques symétriques les uns aux autres et de comparer les résultats des corrélations réalisées afin voir si l'énergie est répartie symétriquement dans l'image matricielle. Cela peut aider à réduire les fausses détections dues au bruit.

Les différentes valeurs seuils de corrélation utilisées peuvent être choisies arbitrairement, ou calculées à partir de caractéristiques statistiques de l'image matricielle (valeur maximale, moyenne, écart-type, coefficient de variation, niveau de bruit, etc.), ou bien calculées de manière dynamique par comparaison de différentes corrélations entre elles. Par exemple, il est possible de considérer que le mouvement est détecté si le résultat de la corrélation entre l'image matricielle et la combinaison des masques 162.3 et 162.4 est inférieur au résultat, pondéré d'un facteur α dont la valeur est préalablement choisie, de la corrélation entre l'image matricielle et le masque 162.1.

En fonction du ou des résultats des corrélations réalisées, une deuxième variable de détection est définie à une première valeur ou une deuxième valeur selon que le mouvement attendu soit considéré comme détecté ou non, par exemple à une valeur '1' si le mouvement attendu est considéré comme détecté et à une valeur '0' si le mouvement attendu est considéré comme n'ayant pas été détecté.

Des masques différents des exemples décrits ci-dessus peuvent être utilisés. Selon un exemple, un ou plusieurs des masques utilisés peuvent être tels que la première partie des pixels de ce ou ces masques correspond à au moins une région de plus forte énergie de la distribution spatio-temporelle d'énergie attendue. Il est également possible d'utiliser, de manière complémentaire, un ou plusieurs masques tels que la première partie des pixels de ce ou ces masques correspond à au moins une région de plus faible énergie de la distribution spatio-temporelle d'énergie attendue.

A l'étape 170, la position d'une valeur maximale de chacune des ondes radar réfléchies, c'est-à-dire de chaque ligne de l'image matricielle 107 ou de la partie 110 de l'image matricielle 107 dans l'exemple décrit, est calculée et comparée avec des positions attendues d'une valeur maximale d'une énergie engendrée par le mouvement à détecter. Pour cela, il est par exemple possible de mettre en œuvre les étapes suivantes :
- un calcul d'un premier vecteur comprenant les valeurs des positions des valeurs maximales des ondes radars réfléchies, puis
- un calcul d'une corrélation croisée entre au moins une partie du premier vecteur et au moins une partie d'un deuxième vecteur comprenant les valeurs des positions attendues de la valeur maximale de l'énergie engendrée par le mouvement destiné à être détecté, puis
- une comparaison d'une valeur de la corrélation croisée calculée avec une valeur seuil de corrélation croisée, cette valeur seuil pouvant être constante ou fonction d'un ou plusieurs paramètres statiques de l'image (bruit, moyenne, écart-type, valeur maximale, etc.)

La figure 12 représente schématiquement les tracés obtenus du premier vecteur désigné par la référence 172 et du deuxième vecteur désigné par la référence 174.

La longueur des vecteurs dépend notamment de la taille de l'image matricielle. En variante, il est possible de ne prendre en compte qu'une partie de l'image matricielle, par exemple pendant une durée donnée de chaque côté de la ligne du milieu de l'image, ce qui est le cas lorsque la partie 110 de l'image matricielle 107 est sélectionnée.

Cette étape 170 peut être vue comme une binarisation de l'image matricielle dans laquelle pour chaque ligne, le plus pixel le plus énergétique et le plus à gauche de l'image est conservé.

Dans les exemples ci-dessus, au moins l'une des étapes 150, 160 et 170 est mise en œuvre à partir des données obtenues à l'issue de l'étape 140. En variante, lorsque l'étape 140 n'est pas mise en œuvre par le circuit de traitement, il est possible qu'au moins l'une des étapes 150, 160 et 170 soit mis en œuvre à partir des données obtenues à l'issue de l'étape 130. Selon une autre variante, lorsque l'étape 130 n'est pas mise en œuvre par le circuit de traitement 108, il est possible qu'au moins l'une des étapes 150, 160 et 170 soit mis en œuvre à partir des données obtenues à l'issue de l'étape 120, c'est-à-dire celle de la partie 110 de l'image matricielle 107. Enfin, lorsque l'étape 120 n'est pas mise en œuvre par le circuit de traitement 108, il est possible qu'au moins l'une des étapes 150, 160 et 170 soit mis en œuvre à partir des données de l'image matricielle 107.

Dans l'exemple de réalisation décrit, le circuit de traitement 108 est configuré pour confirmer, dans une étape de décision 180, la détection ou non du mouvement à partir de la valeur d'au moins l'une des variables de détection fournies par chacune des étapes 150, 160 et 170. Selon un premier exemple, le mouvement peut être considéré comme ayant été détecté si au moins l'une des variables de détection a une valeur confirmant la détection du mouvement attendu. Selon un deuxième exemple, le mouvement peut être considéré comme ayant été détecté si au moins deux des variables de détection ont chacune une valeur confirmant la détection du mouvement attendu. Selon un troisième exemple, le mouvement peut être considéré comme ayant été détecté si toutes les variables de détection ont chacune une valeur confirmant la détection du mouvement attendu. D'autres exemples de combinaison peuvent être envisagés pour cette étape 180, comme par exemple considérer que le mouvement est détecté uniquement si l'une des variables de détection en particulier ait nécessairement une valeur confirmant la détection du mouvement attendu. Selon le nombre de variables de détection utilisées pour la détection du mouvement, il est possible de ne mettre qu'une seule ou deux ou les trois étapes 150, 160, 170.

Selon un exemple, lorsque l'étape 160 est mise en œuvre, la mise en œuvre préalable de l'étape 140 est avantageuse. Selon un autre exemple, lorsque l'étape 170 est mise en œuvre, la mise en œuvre préalable de l'étape 130 est avantageuse.

Dans les différents exemples ci-dessus, les différentes valeurs seuils utilisées peuvent être choisies en fonction des caractéristiques du dispositif 100, du type de mouvement détecté, de l'environnement de fonctionnement du dispositif 100, etc.

Dans les exemples décrits ci-dessus, les différentes étapes relatives à la détection d'un mouvement attendu sont mises en œuvre par le circuit de traitement 108 lorsque l'utilisateur est préalablement détecté à proximité du véhicule 10. En variante, il est possible de réaliser la détection de la distance de l'utilisateur par rapport au véhicule 10 après la mise en œuvre des étapes permettant la détection de mouvement, le résultat de cette détection de mouvement étant par exemple fourni uniquement si l'utilisateur est détecté comme étant à proximité du véhicule 10.

Dans les différents exemples décrits ci-dessus, le dispositif 100 est configuré pour réaliser, via la détection d'ondes radars réfléchies, des images de représentations temps - distance de l'énergie des échos radars reçus.

Le dispositif 100 permet un traitement des ondes radars réfléchies basées sur des techniques de traitement d'images sans faire appel à des techniques complexes d'apprentissage, par exemple sans intelligence artificielle, et mises en œuvre directement sur les signaux radars bruts reçus.

Le dispositif est par exemple destiné à l'industrie automobile. L'électrification des véhicules automobiles génère un contenu électronique de plus en plus important dans les véhicules. L'automatisation de la conduite génère également un contenu électronique de plus en plus important dans les véhicules.

Le dispositif 100 peut s'appliquer plus généralement au domaine des véhicules. Par exemple, le dispositif 100 peut s'appliquer pour permettre une ouverture, ou une commande, en mains libres d'un coffre ou d'un hayon d'une automobile ou d'un autre élément du véhicule.

En variante, le dispositif 100 peut être utilisé pour des domaines autres que celui des véhicules et de l'automobile.

Divers modes de réalisation et variantes ont été décrits. La personne du métier comprendra que certaines caractéristiques de ces divers modes de réalisation et variantes pourraient être combinées, et d'autres variantes apparaîtront à la personne du métier.

Enfin, la mise en œuvre pratique des modes de réalisation et variantes décrits est à la portée de la personne du métier à partir des indications fonctionnelles données ci-dessus.

## Revendications

1. Dispositif radar de détection de mouvement (100), comprenant au moins :
- un circuit d'émission - réception (104) configuré pour émettre une séquence d'ondes radars et recevoir une séquence d'ondes radars réfléchies ;
- un circuit mémoire (106) configuré pour mémoriser au moins une première image matricielle (107) représentative d'une distribution spatio-temporelle de l'énergie des ondes radars réfléchies ;
- un circuit de traitement (108) configuré pour mettre en œuvre au moins une comparaison (150, 160, 170, 180), à partir d'au moins une partie (110) de la première image matricielle (107), de la distribution spatio-temporelle de l'énergie des ondes radars réfléchies avec une distribution spatio-temporelle d'énergie attendue pour au moins un mouvement destiné à être détecté.

2. Dispositif radar de détection de mouvement (100) selon la revendication 1, dans lequel le circuit de traitement (108) est configuré tel que la comparaison (150, 160, 170, 180) mise en œuvre comporte une application (150) d'une transformée de Hough sur ladite au moins une partie (110) de la première image matricielle (107), et configuré pour déterminer la valeur d'une première variable de détection du mouvement en fonction au moins de valeurs de pentes de droites (152, 154) obtenues par l'application de la transformée de Hough sur ladite au moins une partie (110) de la première image matricielle (107).

3. Dispositif radar de détection de mouvement (100) selon la revendication 2, dans lequel le circuit de traitement (108) est configuré pour déterminer que le mouvement est détecté si au moins :
- les valeurs absolues des pentes de deux droites (152, 154) obtenues par l'application de la transformée de Hough sont égales et que les valeurs de ces pentes sont opposées, ou
- une différence entre les valeurs absolues des pentes de deux droites (152, 154) obtenues par l'application de la transformée de Hough est inférieure à une valeur seuil de différence de pentes et que les valeurs de ces pentes sont opposées.

4. Dispositif radar de détection de mouvement (100) selon la revendication 3, dans lequel le circuit de traitement (108) est configuré pour déterminer que le mouvement est détecté si, en outre, une différence entre les sommes de valeurs de pixels par lesquels passent chacune des deux droites (152, 154) est inférieure à une valeur seuil de différence de sommes de valeurs de pixels et/ou les sommes de valeurs de pixels de chacune des deux droites (152, 154) sont inférieures à celles de droites prédéfinies.

5. Dispositif radar de détection de mouvement (100) selon l'une des revendications précédentes, dans lequel le circuit de traitement (108) est configuré tel que la comparaison (150, 160, 170, 180) mise en œuvre comporte au moins un calcul (160) d'une corrélation entre ladite au moins une partie (110) de la première image matricielle (107) et au moins une deuxième image matricielle (162.1 - 162.10) dans laquelle une première partie des pixels ont leurs valeurs définies à une valeur maximale et une deuxième partie des pixels ont leurs valeurs définies à une valeur minimale, et configuré pour déterminer la valeur d'une deuxième variable de détection du mouvement en fonction d'un résultat de comparaison entre au moins une caractéristique statistique d'un résultat de la corrélation calculée et une valeur seuil de corrélation.

6. Dispositif radar de détection de mouvement (100) selon la revendication 5, dans lequel le circuit de traitement (108) est configuré tel que la caractéristique statistique correspond à :
- la somme des valeurs des pixels d'une troisième image matricielle (164.1, 164.2) correspondant au résultat de la corrélation calculée, ou
- la valeur maximale des pixels de la troisième image matricielle (164.1, 164.2), ou
- la valeur moyenne des pixels de la troisième image matricielle (164.1, 164.2), ou
- la valeur du rapport entre l'écart-type et la moyenne des valeurs des pixels de la troisième image matricielle (164.1, 164.2) .

7. Dispositif radar de détection de mouvement (100) selon l'une des revendications 5 ou 6, dans lequel le circuit de traitement (108) est configuré tel que la première partie des pixels de la deuxième image matricielle (162.1 - 162.10) correspond à au moins une région de plus forte énergie de la distribution spatio-temporelle d'énergie attendue.

8. Dispositif radar de détection de mouvement (100) selon l'une des revendications précédentes, dans lequel le circuit de traitement (108) est configuré tel que la comparaison (150, 160, 170, 180) est mise en œuvre entre une position d'une valeur maximale de chacune des ondes radars réfléchies et des positions attendues d'une valeur maximale d'une énergie engendrée par le mouvement destiné à être détecté, et configuré pour déterminer la valeur d'une troisième variable de détection du mouvement en fonction de différences entre la position de la valeur maximale de chacune des ondes radars réfléchies et des positions attendues de la valeur maximale de l'énergie engendrée par le mouvement destiné à être détecté.

9. Dispositif radar de détection de mouvement (100) selon la revendication 8, dans lequel le circuit de traitement (108) est configuré tel que la comparaison (150, 160, 170, 180) mise en œuvre comporte au moins :
- un calcul (170) d'un premier vecteur (172) comprenant des valeurs de positions des valeurs maximales des ondes radars réfléchies ;
- un calcul (170) d'une corrélation croisée entre au moins une partie du premier vecteur et au moins une partie d'un deuxième vecteur (174) comprenant des valeurs de positions attendues de la valeur maximale de l'énergie engendrée par le mouvement destiné à être détecté ;
- une comparaison (170) d'une valeur de la corrélation croisée calculé avec une valeur seuil de corrélation croisée.

10. Dispositif radar de détection de mouvement (100) selon l'une quelconque des revendications 2 à 4 et selon l'une quelconque des revendications 5 à 7 et selon l'une quelconque des revendications 8 ou 9, dans lequel le circuit de traitement (108) est configuré pour confirmer (180) la détection ou non du mouvement en fonction de la valeur d'au moins l'une des première, deuxième et troisième variables de détection.

11. Dispositif radar de détection de mouvement (100) selon l'une des revendications précédentes, dans lequel le circuit de traitement (108) est configuré pour mettre en œuvre, avant la comparaison (150, 160, 170, 180), une sélection (120) d'une partie (110) de la première image matricielle (107), la comparaison (150, 160, 170, 180) étant ensuite mise en œuvre à partir de la partie (110) sélectionnée de la première image matricielle (107).

12. Dispositif radar de détection de mouvement (100) selon l'une des revendications précédentes, dans lequel le circuit de traitement (108) est configuré pour mettre en œuvre, avant la comparaison (150, 160, 170, 180), une normalisation (140) des valeurs des pixels de ladite au moins une partie (110) de la première image matricielle (107) et un seuillage (140) des valeurs normalisées des pixels de ladite au moins une partie (110) de la première image matricielle (107), et tel que la comparaison (150, 160, 170, 180) est mise en œuvre à partir des valeurs normalisées et seuillées (116) des pixels de ladite au moins une partie (110) de la première image matricielle (107).

13. Dispositif radar de détection de mouvement (100) selon l'une des revendications précédentes, dans lequel le circuit de traitement (108) est configuré pour mettre en œuvre, avant la comparaison (150, 160, 170, 180), une convolution (130) de ladite au moins une partie (110) de la première image matricielle (107) et d'un noyau (112), et tel que la comparaison est mise en œuvre ensuite à partir d'une image matricielle (114) résultante de la convolution de ladite au moins une partie (110) de la première image matricielle (107) et du noyau (112).

14. Dispositif radar de détection de mouvement (100) selon l'une des revendications précédentes, dans lequel le circuit d'émission - réception est configuré pour émettre et recevoir des ondes radars de type UWB, et pour émettre la séquence d'ondes radars lorsqu'un utilisateur est détecté à proximité du dispositif radar de détection de mouvement (100).

15. Véhicule (10) comprenant au moins une porte de coffre (12) dont l'ouverture et/ou la fermeture est commandée par un dispositif radar de détection de mouvement (100) selon l'une quelconque des revendications précédentes.

16. Procédé de détection de mouvement, comprenant au moins :
- émission d'une séquence d'ondes radars ;
- réception d'une séquence d'ondes radars réfléchies ;
- mémorisation d'au moins une première image matricielle (107) représentative d'une distribution spatio-temporelle de l'énergie des ondes radars réfléchies ;
- comparaison (150, 160, 170, 180), à partir d'au moins une partie (110) de la première image matricielle (107), de la distribution spatio-temporelle de l'énergie des ondes radars réfléchies avec une distribution spatio-temporelle d'énergie attendue pour au moins un mouvement destiné à être détecté.

17. Procédé de détection de mouvement selon la revendication 16, comprenant en outre, avant la comparaison (150, 160, 170, 180), une sélection (120) d'une partie (110) de la première image matricielle (107), la comparaison (150, 160, 170, 180) étant ensuite mise en œuvre à partir de la partie (110) sélectionnée de la première image matricielle (107).

18. Procédé de détection de mouvement selon l'une quelconque des revendications 16 ou 17, comprenant en outre, avant la comparaison (150, 160, 170, 180), une normalisation (140) des valeurs des pixels de ladite au moins une partie (110) de la première image matricielle (107) et un seuillage (140) des valeurs normalisées des pixels de ladite au moins une partie (110) de la première image matricielle (107), la comparaison (150, 160, 170, 180) étant ensuite mise en œuvre à partir des valeurs normalisées et seuillées (116) des pixels de ladite au moins une partie (110) de la première image matricielle.

19. Procédé de détection de mouvement selon l'une quelconque des revendications 16 à 18, comprenant en outre, avant la comparaison (150, 160, 170, 180), une convolution (130) de ladite au moins une partie (110) de la première image matricielle (107) et d'un noyau (112), la comparaison étant ensuite mise en œuvre à partir d'une image matricielle (114) résultante de la convolution de ladite au moins une partie (110) de la première image matricielle (107) et du noyau (112).

20. Procédé de détection de mouvement selon l'une quelconque des revendications 16 à 19, comprenant en outre, avant l'émission de la séquence d'ondes radars, une détection d'un utilisateur à proximité d'un dispositif radar de détection de mouvement mettant en œuvre le procédé, l'émission de la séquence d'ondes radars étant ensuite mise en œuvre si l'utilisateur est détecté comme étant à proximité du dispositif.
